# EUROPEAN PATENT APPLICATION

(11) **EP 4 357 314 A1**
(43) Date of publication of application: **24.04.2024**
(21) Application number: 22460054.4
(22) Date of filing: 21.10.2022
(51) Int. Cl.: C04B 20/02

(54) **A METHOD OF VALORIZATION AND SEPARATION OF AGGREGATES, ESPECIALLY FLY ASH, IN ORDER TO REMOVE NH3 COMPOUNDS**

(71) Applicant: Politechnika Slaska, 44-100 Gliwice (PL)
(72) Inventor: Ciukaj, Szymon, 41-608 Swietochlowice (PL); Kalisz, Sylwester, 44-100 Gliwice (PL); Maj, Izabella, 44-100 Gliwice (PL); Sobieraj, Jakub, 44-186 Gieraltowice (PL)

(57) **Abstract**

Method of valorization of aggregate, especially raw fly ashes resulting from energy combustion of fuels, with the content of NH3 compounds >100 mg/kg of raw ash, in order to remove NH₃ compounds from ash and separate the grinded ash particles size classes, characterized in that the fly ash contaminated with NH3 compounds are subjected to simultaneous grinding process and separation process in the 1^{st} stage grinder at ambient temperature, with a stream of ventilating air defined in kilograms of ventilating air per kilogram of raw ash, then a final product is obtained or further heated and separated grinded fly ash streams are directed, depending on NH₃ content and particle size distribution to the 2^{nd} stage grinder.

In that the 1^{st} stage grinder is vibrating type grinder and is electrically heated.

In that the grinding process in the 1^{st} stage grinder and in the 2^{nd} stage grinder is carried out preferably at a temperature of up to 120 °C.

## Description

The subject of the invention is a method of valorization and separation of aggregates, especially fly ash, in order to remove NH₃ compounds, in particular from fly ash, and to produce fly ash of the required particle size distribution for the industrial use, in particular for the production of cements and concrete.

The processes of energy firing of solid fuels and waste are controlled in terms of their impact on the natural environment, including emissions of chemical compounds considered as harmful to people and environment. The main harmful chemical compounds are nitrogen oxides (NOₓ), which need to be removed from the flue gas by means of the non-catalytic or catalytic reduction technology using ammonia (NH3) spraying. The ammonia is injected into the flue gas stream as a spray of ammonia water or urea solution. Due to the fact that the NOₓ chemical reduction processes involving NH₃ are incomplete, some of the unreacted NH₃ evaporates and escape with the combustion flue gas flow in the form of gas or aerosols to the stack and ambient air. The flue gas resulting from the energy firing of solid fuels or waste contains fly ash particles that can adsorb the unreacted NH₃ gaseous particles or NH₃ aerosols particles. The more strict the NOₓ emission limits are set for power plants, the more amount of the ammonia water is used to reduce these emissions and, as the side effect, the amount of unreacted NH₃ in the flue gas is increased. As a result, fly ash with a high ammonia content, even up to 3000 mg NH₃/kg dry mass of ash, is observed. The presence of the unreacted NH₃ in the fly ash contributes to the difficulties in the industrial usage of such ashes as an additive to the cement and concrete including the problems with the storage of NH₃ contaminated ashes in a storage siloses. Typically, it is required that the ammonia content in the fly ash is limited to the value of 100 mg NH₃/kg dry mass of ash. If this value is exceeded, it is usually impossible to use such ashes for the production of cements and concretes.

The aggregates grinding process is a mechanical treatment (valorization process) of brittle material subjected to the processes of shredding, crushing and comminuting by the grinding device or by the system of grinders in the mill. These processes are accompanied by the release of heat through the friction between the aggregate particles and the grinders. The process of grinding aggregate particles, depending on the design of the grinding system, may be accompanied by a simultaneous screening and separation process of individual crushed aggregate solid particles and the release of gaseous fractions adsorbed or chemically bound in the aggregate solid particles. The heat generated as a result of the friction of the grinders against the aggregate layer or heat supplied to the grinding system, e.g. with pre-heated air ventilating the mill or by means of the electric heaters heating the grinding device, favors the release of gaseous compounds in the process of desorption of gaseous compounds and aerosols bound on the surface of the aggregate particles or the evaporation of chemical compounds bound in aggregate particles, including the NH₃ compounds. The grinding process is accompanied by a reduction in granulation (fragmentation) of the grounded aggregate, which has a beneficial effect on its industrial usage. Along with the fragmentation of the aggregate, it is possible to screen and separate particles of various sizes and weights, depending on the industrial needs.

There are known methods of mechanical valorization of the fly ashes from power energy sector. The Polish patent description No. 384199 discloses a method of producing a hydraulic binder in the form of activated fly ash. The invention relates to the method for producing a hydraulic binder in the form of activated fly ash, characterized in that, the raw fly ash is activated by the grinding process in an electromagnetic grinder. The invention also relates to activated ash, hydraulic binder, sulfur or cement concrete and other mineral mixtures.

From the Polish patent description No. 385075 there is known a method of producing an activated cement which is characterized in that it comprises a valorization process stage in which the burnt cement components, selected from the group consisting of clinker, possibly fly ash and possibly other typical additives, are grounded in an electromagnetic grinder. Preferably, the cement components are grounded in 30 to 480 seconds. Preferably, cement components are grounded with up to 35% by weight of fly ash.

Polish patent description No. 429284 describes a method of producing raw material, dried clay granulate and fired clay granulate, which consists in transporting clay raw material and possibly fly ashes to the kneader and pumping to it a certain part of a given amount of diluted organic waste and the semi-finished product lumped in the crusher is dried and then, after cooling, it is grounded and returned to the crusher and the raw material composition is supplemented with subsequent portions of the set amount of diluted organic waste. The semi-finished product is optionally dried at a temperature not exceeding 250 °C and then the semi-finished product is subjected to a firing process at a temperature not exceeding 1300 °C in the end zone of the furnace.

The Polish patent description No. 371761 describes a method of reactivation of ash by grinding it in a mill with forced transport including water injection. The mill according to the invention simultaneously grinds the ash and hydrates it, converting the free calcium compounds present in the ash into calcium hydroxide. Preferably, after grinding, drying agents are added to the grounded and hydrated ash to facilitate the formation of acceptably fine lumps, thereby increasing the amount of calcium. A particularly advantageous embodiment of the invention relates to the use as a water source of wet coal sludge, which also constitutes production waste, to be ground with the ash. The carbon present in the coal sludge is used as an additional fuel for the combustion process. As a result, the existing waste is transformed into a valuable useful raw material.

The Polish patent description No. 304259 describes an invention that solves the problem of producing a binder from waste materials such as fly ash from lignite. The method consists in mixing individual grain fractions of ash in appropriate proportions, and then grinding them until the grinded material specific surface area of 3000-3500 cm²/g according to Blaine scale is obtained. The ash is moisturized and pre-hydrated in a saturated steam atmosphere at a temperature of 110-150 °C and a pressure of 0.1-0.5 MPa for 1-2 hours. The binder is intended especially for the production of autoclaved building materials.

The Polish patent description No. 346102 describes a method of obtaining zeolites from the fly ashes resulting from the combustion of coal fuels in the fluidized bed boilers and pulverized coal fired boilers by the alkaline hydrothermal activation of these ashes. The method is characterized by the process where to the fly ash of a chemical composition of SiO₂ 28 - 45 % wt. and Al₂O₃ 25-%37 wt. is added a solid NaOH in a weight ratio of 1 to 2 parts by weight of NaOH to 1 part by weight of fly ash and optionally 0-50% by weight of modifying agents. The mixture obtained in this way is grounded, and then preheated at the temperature of 300 - 500 °C for 0.5 - 1.0 hrs, then cooled to the ambient temperature, grounded again, then water is added to the mixture in the proportion of 5 to 15 parts by volume of water to 1 part by weight of the fly ash. The aqueous mixture is shaken at ambient temperature for 8-15 hrs and then heated at 90 - 100 °C for 5-24 h with optional continuous shaking, then the spent NaOH is removed and the zeolite obtained is washed with distilled water and dried at a temperature of 100 - 200 °C for 12 - 24 hours.

The majority of known ash grinding solutions use mechanical activation process to obtain a binder with the required specific area or chemical activation process by adding alkaline or acid compounds to give the final product, most often a concrete binder, the required properties, e.g. concrete compressive strength.

The aim of the invention is to remove the NH₃ compounds from the fly ash and, at the same time, to improve the quality of the produced fly ash by changing its granulation with the possibility of separating of the individual grain fractions by developing a multi-stage method of aggregate valorization, especially fly ash, in order to remove NH₃ compounds.

The essence of the invention is a method of aggregate valorization, especially raw fly ash resulting from energy firing of fuels, with the content of NH₃ compounds >100 mg/kg in raw ash, in order to remove NH₃ compounds and separate the aggregate, characterized in that the fly ash contaminated with NH₃ compounds is subjected to the grinding process and at the same time to the separation process in the 1^{st} stage grinder at ambient temperature, with a stream of ventilating air defined in kilograms of ventilating air per kilogram of raw ash, afterwards a final useful product is obtained or the produced ash is heated and separated into fly ash streams and directed, depending on the NH₃ content and the obtained granulometry, to the 2nd stage grinder.

The first stage grinder is a vibrating type grinder and is electrically heated.

The grinding process in both the 1^{st} stage grinder and in the 2^{nd} stage grinder succeeds in a heated atmosphere reaching up to 120 °C. Grinding in the 1^{st} stage grinder and in the 2^{nd} stage grinder is carried out with a stream of ventilating air, favorably dry air of a dew point temperature <+ 4°C.

The second stage grinder is a ring-ball or ring-roller mill.

The raw fly ash stream is supplied to the grinders continuously and the grinded fly ash stream is collected from the grinders continuously, with a constant mass flow rate specific to the process.

The method of the aggregate valorization according to the invention is carried out in the presence of a catalyst fed to the fly ash stream immediately upstream the grinders or fed directly to the grinders. The catalyst used in the valorization process is a fine aluminum-silicate sorbent with a specific area >60 m²/g, most preferably halloysite, preferably in a molar ratio of 1:1.

During the research study of the grinding process it has been found that during the grinding process of the ash containing NH₃ compounds, these compounds are released and, as a result, their content in the grinded final ash is reduced.

In the grinding process carried out in the grinder chamber, the NH₃ compounds contained in the ash are released. A mechanical separator with the adjustable separation efficiency is installed in the outlet part of the 2^{nd} stage grinder. Depending on the adjusted separation efficiency and the number of outlets from the grinder separator, it is possible to discharge the fly ash streams purified from NH₃ compounds from each of the outlets and with different particle size distribution depending on the discharge outlet.

The advantage of the solution according to the invention is the reduction of the NH₃ content and thus the achievement of the required fly ash parameters in terms of the permissible content of NH₃ compounds and the simultaneous improvement of fly ash particle size distribution. Ashes with a reduced NH₃ content can be used in the industrial applications, e.g. as a filler for the production of polymers, concrete, cements or base aggregates. Depending on the applied combustion technology, the generated fly ash may come from the combustion of pulverized coal, from the fluidized bed combustion technology or from the grate combustion technology. Each type of fly ash origin combustion technology can be subjected to the valorization process according to the described invention.

### The subject of the invention is illustrated by examples.

### Example 1

A sample of the fly ash obtained from the grate coal combustion technology, contaminated with NH₃ compounds in the amount of 2852 mg/kg, was located in the 1^{st} stage ball type grinder. After 500 grinding cycles, the content of NH₃ compounds was reduced to 2797 mg/kg, and after 1000 grinding cycles, the ammonia content was reduced to 2482 mg/kg. The grinding process was carried out at an ambient temperature of +25 °C and a relative air humidity of 60%.

### Example 2

A sample of the fly ash obtained from the fluidized bed coal combustion technology, contaminated with the NH₃ compounds in the amount of 5.26 mg/kg, was located in the 1^{st} stage ball type grinder. After 1000 grinding cycles, the ammonia content was reduced below the quantification limit <4.72 mg/kg. The grinding process was carried out at an ambient temperature of +25 °C and a relative air humidity of 60%.

### Example 3

A sample of the fly ash obtained from the technology of fluidized bed combustion of coal mixed with municipal waste (RDF), contaminated with NH₃ compounds in the amount of 52.82 mg/kg, was located in the 1^{st} stage ball type grinder. After 1000 grinding cycles, the ammonia content was reduced to 33.96 mg/kg. The grinding process was carried out at an ambient temperature of +25 °C and a relative air humidity of 60%.

### Example 4

A sample of the fly ash was obtained from the coal grate combustion technology. The fly ash sample particle size distribution defined by the classes d10 = 10.4 µm, d50 = 122 µm and d90 = 649 µm was located in the 1st stage ball type grinder. After 500 cycles, the particle size distribution was improved to the values of d10 = 5.16 µm, d50 = 77.5 µm and d90 = 477 µm, and after 1000 grinding cycles, it was further improved to the value of d10 = 3.23 µm, d50 = 51.4 µm and d90 = 347 µm. The grinding process was carried out at an ambient temperature of +25 °C and a relative air humidity of 60%.

## Claims

1. Method of valorization of aggregate, especially raw fly ashes resulting from energy combustion of fuels, with the content of NH₃ compounds >100 mg/kg of raw ash, in order to remove NH₃ compounds from ash and separate the grinded ash particles size classes, **characterized in that** the fly ash contaminated with NH₃ compounds are subjected to simultaneous grinding process and separation process in the 1^{st} stage grinder at ambient temperature, with a stream of ventilating air defined in kilograms of ventilating air per kilogram of raw ash, then a final product is obtained or further heated and separated grinded fly ash streams are directed, depending on NH₃ content and particle size distribution to the 2^{nd} stage grinder.

2. The method of aggregate valorization according to the method of claim 1, **characterized in that** the 1^{st} stage grinder is vibrating type grinder and is electrically heated.

3. Aggregate valorization method according to claim 1, **characterized in that** the grinding process in the 1^{st} stage grinder and in the 2^{nd} stage grinder is carried out preferably at a temperature of up to 120 °C.

4. Aggregate valorization method according to the method of claim 1, **characterized in that** the grinding process in the 1^{st} stage grinder and in the 2^{nd} stage grinder is carried out with a stream of ventilating air, preferably dry air of a dew point of <+ 4 °C.

5. Aggregate valorization method according to the method of claim 1, **characterized in that** the 2^{nd} stage grinder is a ring-ball or ring-roller type of grinder.

6. Aggregate valorization method according to the method of claim 1, wherein the raw ash stream is fed to the grinders and the grinded ash stream is collected continuously, at a constant process-specific mass flow.

7. Aggregate valorization method according to the method of claim 1, **characterized in that** the grinding process is carried out in the presence of a catalyst fed to the raw ash stream immediately upstream the grinders or the catalyst is fed directly to the grinders of 1^{st} stage or 2^{nd} stage.

8. Aggregate valorization method according to the method of claim 1, **characterized in that** a catalyst is as a particulate alumina-silicate sorbent with a surface specific area >60 m²/g, most preferably halloysite, preferably in a molar ratio of 1:1 used in the grinding process.
